(19) Europäisches Patentamt / European Patent Office / Office européen des brevets

(11) **EP 3 540 427 B1**

(12) **EUROPEAN PATENT SPECIFICATION**


(45) Date of publication and mention of the grant of the patent:
**12.02.2025 Bulletin 2025/07**

(21) Application number: **17868688.7**

(22) Date of filing: **10.11.2017**

(51) International Patent Classification (IPC):
***G01N 30/88*** *(2006.01)* ***B01D 15/08*** *(2006.01)*
***B01J 20/20*** *(2006.01)* ***B01J 20/28*** *(2006.01)*
***B01J 20/30*** *(2006.01)* ***B01J 20/32*** *(2006.01)*
***G01N 30/72*** *(2006.01)* ***G01N 30/52*** *(2006.01)*

(52) Cooperative Patent Classification (CPC):
**B01J 20/3293; B01J 20/28004; B01J 20/28057; B01J 20/28078; B01J 20/3078; B01J 20/3085; B01J 20/3204; B01J 20/324; G01N 30/52;**
B01D 15/08; G01N 30/72; G01N 30/88

(86) International application number:
**PCT/JP2017/040611**

(87) International publication number:
**WO 2018/088531 (17.05.2018 Gazette 2018/20)**


(54) **COLUMN FILLER FOR LIQUID CHROMATOGRAPHY**

SÄULENFÜLLER FÜR FLÜSSIGCHROMATOGRAFIE

CHARGE POUR COLONNE DE CHROMATOGRAPHIE EN PHASE LIQUIDE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2016 JP 2016220977**

(43) Date of publication of application:
**18.09.2019 Bulletin 2019/38**



(73) Proprietors:
- **Sekisui Chemical Co., Ltd.**
  **Osaka-shi, Osaka 530-0047 (JP)**
- **National University Corporation Kumamoto University**
  **Kumamoto-shi, Kumamoto 860-8555 (JP)**

(72) Inventors:
- **SUN, Ren-de**
  **Mishima-gun, Osaka 618-0021 (JP)**
- **NOZATO, Shoji**
  **Mishima-gun, Osaka 618-0021 (JP)**
- **NAKASUGA, Akira**
  **Mishima-gun, Osaka 618-0021 (JP)**
- **IHARA, Hirotaka**
  **Kumamoto-shi, Kumamoto 860-8555 (JP)**
- **TAKAFUJI, Makoto**
  **Kumamoto-shi, Kumamoto 860-8555 (JP)**
- **KUWAHARA, Yutaka**
  **Kumamoto-shi, Kumamoto 860-8555 (JP)**
- **NOGUCHI, Hiroki**
  **Kumamoto-shi, Kumamoto 860-8555 (JP)**
- **LIU, Tianhang**
  **Kumamoto-shi, Kumamoto 860-8555 (JP)**

(74) Representative: **Cabinet Beau de Loménie**
**158, rue de l'Université**
**75340 Paris Cedex 07 (FR)**



(56) References cited:
**WO-A1-2016/052406 JP-A- H04 346 830**
**JP-A- H10 206 407 JP-A- S5 629 162**

- **KIM YOUNG-KUK ET AL: "Porous carbon-coated silica macroparticles as anode materials for lithium ion batteries: Effect of boric acid", JOURNAL OF POWER SOURCES, ELSEVIER SA, CH, vol. 272, 16 September 2014 (2014-09-16), pages 689 - 695, XP029049019, ISSN: 0378-7753, DOI: 10.1016/J.JPOWSOUR.2014.08.128**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- KIM H ET AL: "Three-dimensional porous silicon particles for use in high-performance lithium secondary batteries", ANGEWANDTE CHEMIE, INTERNATIONAL EDITION, WILEY-VCH, DE, vol. 47, no. 52, 31 December 2008 (2008-12-31), pages 10151 - 10154, XP002739635, ISSN: 1433-7851, [retrieved on 20081117], DOI: 10.1002/ANIE.200804355
- KAIJIE YANG ET AL: "Graphene-coated materials using silica particles as a framework for highly efficient removal of aromatic pollutants in water", SCIENTIFIC REPORTS, vol. 5, no. 1, 29 June 2015 (2015-06-29), XP055518825, DOI: 10.1038/srep11641
- MIN SOO KIM ET AL: "Preparation of mesoporous silica particles with carbon-coated pore walls: selective grafting of polyacrylonitrile onto the inner surface of a mesoporous silica particle and carbonization", JOURNAL OF MATERIALS CHEMISTRY, vol. 22, no. 38, 1 January 2012 (2012-01-01), GB, pages 20713, XP055695790, ISSN: 0959-9428, DOI: 10.1039/c2jm34188c
- LU , T. ET AL.: "Homogeneous edge-plane carbon as stationary phase for reversed-phase liquid chromatography", ANALYTICAL CHEMISTRY, vol. 87, 2015, pages 3616 - 3622, XP055501075

## Description

TECHNICAL FIELD

The present invention uses a column filler for liquid chromatography that has a great adsorption capacity, adjustable adsorption selectivity, and high shape retainability and therefore is usable for measurement of various substances and capable of achieving excellent separation performance and a high filling rate in a column.

BACKGROUND ART

In the analytical chemistry field, fine particles having a high specific surface area are often used, in particular, for analytical columns used in high performance liquid chromatography (HPLC) or precolumns (including those having a cartridge shape) used in a pretreatment before analysis.
Known column fillers for HPLC include silica particles and chemically modified products thereof. Patent Literature 1 discloses silica particles and particles obtained by chemically modifying silica particles with a functional group such as an octadecylsilyl group.
Such silica particles and chemically modified products thereof are excellent in pressure resistance and solvent stability. The use of silica particles in which the particle size and pore size are controlled allows achievement of excellent separation performance (e.g., high resolution performance). For the above reasons, silica particles and chemically modified products thereof are widely used for simple and precise column analysis.
Meanwhile, Non-Patent Literature 1 and 2 disclose carbon-coated silica particles or nanoparticles. Patent Literature 2 discloses carbon-coated metal oxides or nitrides. Non-Patent Literature 3 discloses amorphous carbon on a silica substrate for reversed-phase liquid chromatography.

CITATION LIST

- Patent Literature

Patent Literature 1: JP 2006-192420 A
Patent Literature 2: WO 2016/052406

- Non-Patent Literature

- Non-Patent Literature 1: Kim et al., J. Power Sourc. Vol. 272, 2104, 689-695
- Non-Patent Literature 2: Kim et al., Angew. Chem., Vol. 47:52, 2008, 10151-10154
- Non-Patent Literature 3: Lu et al., Anal. Chem., Vol. 87, 2015, 3616-3622

SUMMARY OF INVENTION

- Technical Problem

The filler of Patent Literature 1, however, cannot be used for measurement of substances in a wide range of fields. A filler having further better adsorption selectivity has been therefore desired.
The present invention aims to, in consideration of the state of the art, provide a column filler for liquid chromatography that has a great adsorption capacity, adjustable adsorption selectivity, and high shape retainability and therefore is usable for measurement of various substances and capable of achieving excellent separation performance and a high filling rate in a column when used as a column filler for liquid chromatography.

- Solution to problem

The present invention relates to the use of carbon-coated porous particles as a column filler for liquid chromatography, the carbon-coated porous particles including porous particles each having a coating layer containing an amorphous carbon on a surface, wherein the amorphous carbon is derived from carbon contained in an oxazine resin.
The present invention is specifically described in the following.

The present inventors made intensive studies to find out that formation of a coating layer containing an amorphous carbon on the surface of the porous particles allows an increase of the adsorption capacity, adjustment of the adsorption selectivity, and enhancement of the shape retainability. They also found out that such particles are usable for measurement of various substances and capable of achieving excellent separation performance and a high filling rate in a column when used as a column filler for liquid chromatography. Thus, the present invention was completed.

[Porous particles]

The column filler for liquid chromatography used in the present invention includes carbon-coated porous particles including porous particles.
The porous particles serve as carriers of the carbon-coated porous particles and have fine pores on the surface and/or inside thereof.
Examples of the shape of the porous particles include spherical shape, ellipsoid shape, flat shapes (e.g., scale shape, plate shape, disk shape, semi-spherical shape, star shape, petal shape, ribbon shape, starfish shape, indefinite shape, polygonal plate shape, and elliptical plate shape), stick shape, needle shape, and spindle shape. Preferred among these is spherical shape.
The porous particles may have any average particle size. The lower limit of the average particle size is preferably 10 nm and the upper limit thereof is preferably 500 μm. The lower limit of the average particle size of the porous particles is more preferably 1 μm and still more preferably 2 μm. The upper limit thereof is more preferably 500 μm, still more preferably 100 μm, most preferably 30 μm.
The average particle size herein refers to the volume average particle size measured using a FE-SEM image.
The porous particles may have any average pore size. The lower limit of the average pore size is preferably 1 nm and the upper limit thereof is preferably 200 nm. In particular, the porous particles having an average pore size of 2 nm or more and 100 nm or less can be suitably used as a column filler for high-resolution HPLC.
The average pore size herein refers to the average pore size measured using a gas-adsorbing type pore size distribution analyzer.
The porous particles may have any specific surface area. The lower limit of the specific surface area is preferably 10 $m^2/g$ and the upper limit thereof is preferably 4,000 $m^2/g$. In particular, the porous particles having a specific surface area of 20 $m^2/g$ or more and 500 $m^2/g$ or less can be used as a column filler for high-resolution HPLC.
The specific surface area herein refers to the specific surface area measured using a gas-adsorbing type pore size distribution analyzer.
The porous particles preferably have a non-smooth surface. Such a surface shape may have a recessed structure, a protruding structure, or a fractal structure.
The fractal structure refers to a multiple protruding/recessed structure including a protruding/recessed structure with a larger cycle and a protruding/recessed structure with a smaller cycle provided in the protruding/recessed structure with a larger cycle on the surface of each porous particle.
Examples of the material of the porous particles include inorganic materials and organic materials.
Examples of the inorganic materials include metal elements and metalloid elements, as well as alkali metals (e.g., lithium, sodium, potassium, rubidium, cesium, and francium) and alkaline earth metals (e.g., magnesium, calcium, strontium, barium, and radium).
Examples of the metal elements include titanium, aluminum, cerium, neodymium, tungsten, vanadium, lead, zinc, nickel, bismuth, tin, scandium, and zirconium.
Examples of the metalloid elements include silicon, boron, germanium, arsenic, and tellurium.
Examples of the material further include oxides, chlorides, sulfides, carbonates, silicates, phosphates, nitrates, and sulfates of the inorganic materials, and composites of these.
Preferred among these are oxides of the inorganic materials. In particular, the inorganic materials preferably contain at least one selected from the group consisting of silica, alumina, zirconia, and titania.
Examples of the organic materials include styrene-containing polymers, acrylic-containing polymers, polyester resins, polycarbonate resins, vinyl chloride resins, polypropylene resins, and mixtures of these. Preferred among these are styrene-containing polymers and acrylic-containing polymers.
Examples of the styrene-containing polymers include polystyrene, acrylonitrile-butadiene-styrene copolymers (ABS), acrylonitrile-styrene-special acrylic elastomer copolymers (AAS), elastomer copolymers such as acrylonitrile-styrene-EPDM (AES) and styrene-acrylonitrile copolymers (AS).
Examples of the acrylic-containing polymers include homopolymers or copolymers of acrylic acid esters, methacrylic acid esters, acrylic acid, and methacrylic acid. The (meth)acrylic acid ester is preferably an alkyl (meth) acrylate having a C1-C4 alkyl group, more preferably methyl methacrylate. Examples of a copolymerizable monomer include vinyl esters such as vinyl acetate, aromatic vinyls such as styrene and vinyl toluene, and vinyl cyanides such as acrylonitrile and methacrylonitrile.

The porous particles including an organic material may be obtained by any method, and are preferably obtained by an emulsion polymerization method, a suspension polymerization method, a dispersion polymerization method, or any other polymerization method.

[Coating layer]

The carbon-coated porous particles each have a coating layer containing an amorphous carbon on the surface of the porous particle. The coating layer may be formed at least on a part of the surface of each porous particle or formed to cover the entire surface of each porous particle.

With such a coating layer, the porous particles used as a column filler for liquid chromatography can be usable over a wider pH range to be employable for measurement of a variety of substances. In addition, peak tailing is not likely to occur and excellent separation performance can be achieved. In particular, when the carbon constituting the coating layer is derived from carbon contained in an oxazine resin, the coating layer has a developed aromatic ring-derived $\pi$-$\pi$ covalent bond structure to exhibit especially high aromatic compound separation performance.

The presence of such a coating layer suppresses oxidation or reduction of the porous particles during use and irreversible adsorption of basic substances, improving the durability of the porous particles.

In addition, such a coating layer is more compatible with the porous particles compared to an octadecylsilyl (ODS) group that is bonded in a conventional method, and therefore is able to maintain excellent separation performance for a long period of time.

The coating layer contains an amorphous carbon. The use of an amorphous carbon enables formation of a highly dense coating layer, so that oxidation or reduction of the porous particles during use and irreversible adsorption of basic substances can be suppressed.

The amorphous carbon constituting the coating layer has an amorphous structure in which a sp2 bond and a sp3 bond are both present, and includes carbon. Preferably, the peak intensity ratio between G band and D band obtained from the Raman spectrum is 1.5 or more.

In the measurement of the amorphous carbon by Raman spectroscopy, two peaks including G band (at around 1,580 $cm^{-1}$) corresponding to the sp2 bond and D band (at around 1,360 $cm^{-1}$) corresponding to the sp3 bond can be clearly observed. In the case where the carbon material is crystalline, either one of the two bands is minimized. For example, in the case of a monocrystalline diamond, G band at around 1,580 $cm^{-1}$ is hardly observed. In contrast, in the case of a highly pure graphite structure, D band at around 1,360 $cm^{-1}$ hardly appears.

In the present invention, particularly when the peak intensity ratio between G band and D band (peak intensity of G band/peak intensity of D band) is 1.5 or more, the denseness of the formed amorphous carbon film is high and the effect of suppressing interpaticle sintering at high temperature is excellent.

When the peak intensity ratio is less than 1.5, the denseness of the film and the effect of suppressing sintering at high temperature are insufficient. In addition, the adhesiveness and strength of the film are lowered.

The peak intensity ratio is more preferably 1.7 or more and is preferably 10 or less.

The coating layer may contain an element other than carbon. Examples of the element other than carbon include nitrogen, hydrogen, and oxygen. The amount of such an element is preferably 10 atom% or less relative to the total of carbon and the element other than carbon.

The amorphous carbon constituting the coating layer is derived from carbon contained in an oxazine resin. The oxazine resin can be carbonized at low temperature and therefore allows cost reduction.

The oxazine resin is a resin commonly classified as a phenolic resin and is a thermosetting resin obtainable by reacting a phenol and formaldehyde as well as an amine. In the case where the phenol used is of a type further having an amino group in the phenol ring, such as p-aminophenol, no amine needs to be added in the reaction and the oxazine resin tends to be easily carbonized. In terms of carbonization, the use of a naphthalene ring instead of a benzene ring further facilitates carbonization.

Examples of the oxazine resin include benzoxazine resin and naphthoxazine resin. Among these, preferred is naphthoxazine resin because it can be carbonized at the lowest temperature. The structure of the oxazine resin is partly shown below by the formula (1) representing a partial structure of the benzoxazine resin and the formula (2) representing a partial structure of the naphthoxazine resin.

The oxazine resin refers to a resin having a six-membered ring added to a benzene ring or naphthalene ring. The six-membered ring includes oxygen and nitrogen, which is the origin of the name.

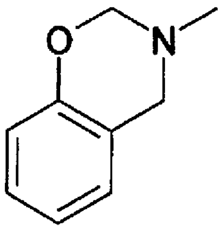

··· (1)

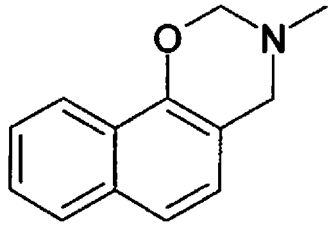

··· (2)

The use of the oxazine resin enables formation of an amorphous carbon film at remarkably lower temperature compared to the case where another resin such as an epoxy resin is used. Specifically, carbonization at a temperature not higher than 200°C is possible. In particular, the use of the naphthoxazine resin enables carbonization at further lower temperature.

As above, carbonization at lower temperature by using an oxazine resin enables formation of a coating layer containing an amorphous carbon and having high denseness.

The reason why a coating layer containing an amorphous carbon and having high denseness can be formed is not clarified. However, it is presumably because, in the case where naphthoxazine resin is used as an oxazine resin, for example, the naphthalene structures in the resin are locally connected by heating at low temperature and a layered structure at the molecular level is formed. The layered structure without being subjected to high-temperature treatment is not developed to the long-distance periodic structure like the graphite structure and therefore shows no crystallinity.

Whether or not the obtained carbon has a graphite-like structure or an amorphous structure can be confirmed by determining whether or not a peak is detected at a position where 2θ is 26.4° by an X-ray diffraction method described later.

Examples of the material usable as a raw material of the naphthoxazine resin include dihydroxy naphthalene that is a phenol, formaldehyde, and an amine. These materials will be specifically described later.

The amorphous carbon is preferably one obtainable by heat-treating the oxazine resin at a temperature of 50°C to 900°C (preferably at 150°C to 350°C). In the present invention, the use of naphthoxazine resin that is carbonizable at low temperature enables preparation of an amorphous carbon at relatively low temperature.

Preparation at low temperature is advantageous in that an amorphous carbon can be produced at a lower cost in a simple process compared to a conventional one.

The upper limit of the average thickness of the coating layer is preferably 50 nm. When the average thickness of the coating layer is more than 50 nm, the carbon-coated porous particles after coating may be too large. The upper limit is more preferably 30 nm. The lower limit is not particularly limited and is preferably 0.5 nm.

The thickness of the coating layer preferably has a coefficient of variation (CV value) of 7% or less. When the thickness of the coating layer has a CV value of 7% or less, the coating film is uniform and has less variation in thickness, having high barrier properties against oxygen or water vapor. Consequently, the presence of the coating layer contributes to the improvement in oxidation resistance or water resistance of carbon-coated porous particles, providing long-term stability of thermochromic properties. The upper limit of the CV value of the thickness of the coating layer is more preferably 5%. The lower limit thereof is not particularly limited and is preferably 0.5%.

The CV value (%) of the thickness is a value in percentage obtained by dividing the standard deviation by the average thickness and is a numerical value obtained by the following equation. A smaller CV value means smaller variation in thickness.

CV value (%) of thickness = (Standard deviation of thickness/average thickness) $\times$ 100

The average thickness and standard deviation can be measured using, for example, FE-TEM.

In the present invention, in the case where the coating layer is measured by time-of-flight secondary ion mass spectrometry (TOF-SIMS), at least one of a mass spectrum derived from the benzene ring and a mass spectrum derived from the naphthalene ring is preferably detected.

Detection of such mass spectra derived from the benzene ring and naphthalene ring confirms that the carbon constituting the coating layer is derived from the carbon contained in the oxazine resin. At the same time, a highly dense coating film can be obtained.

The mass spectrum derived from the benzene ring herein refers to a mass spectrum at around 77.12 and the mass spectrum derived from the naphthalene ring herein refers to a mass spectrum at around 127.27.

The above analysis can be performed using a TOF-SIMS device (available from ION-TOF GmbH).

In the present invention, in the case where the coating layer is measured by an X-ray diffraction method, the peak is preferably not detected at a position where 2θ is 26.4°.

The peak at a position where 2θ is 26.4° is the crystalline peak of graphite. The absence of a peak at such a

position confirms that the carbon constituting the coating layer has an amorphous structure.

The above measurement can be performed using, for example, an X-ray diffractometer (SmartLab Multipurpose available from Rigaku Corporation).

In the present invention, the coating layer may consist only of an amorphous carbon or may contain another component in addition to an amorphous carbon.

[Carbon-coated porous particles]

The carbon-coated porous particles may have any specific surface area. The lower limit of the specific surface area is preferably 10 $m^2$/g and the upper limit thereof is preferably 4,000 $m^2$/g. In particular, when the specific surface area is 20 $m^2$/g or more and 500 $m^2$/g or less, such particles can be used as a column filler for high-resolution HPLC.

The carbon-coated porous particles may have any average particle size. The lower limit of the average particle size is preferably 10 nm and the upper limit thereof is preferably 500 μm. The lower limit of the average particle size of the carbon-coated porous particles is more preferably 1 μm, still more preferably 2 μm. The upper limit thereof is more preferably 500 μm, still more preferably 100 μm, most preferably 30 μm.

The average particle size herein means the volume average particle size measured using a FE-SEM image.

The carbon-coated porous particles may have any average pore size. The lower limit of the average pore size is preferably 1 nm and the upper limit thereof is preferably 200 nm. In particular, when the average pore size is 2 nm or more and 100 nm or less, such particles can be suitably used as a column filler for liquid chromatography (high-resolution HPLC).

The average pore size herein means the average pore size measured using a gas-adsorbing type pore size distribution analyzer.

The rate of change in the average pore size between the porous particles and the carbon-coated porous particles [((average pore size of porous particles) - (average pore size of carbon-coated porous particles)) × 100/(average pore size of porous particles)] is preferably within 30%.

Moreover, [(specific surface area of porous particles) - (specific surface area of carbon-coated porous particles)] is preferably within 200 $m^2$/g, more preferably within 100 $m^2$/g.

The carbon-coated porous particles constituting the column filler for liquid chromatography used in the present invention may be produced by a method including: a step of preparing a mixed solution containing formaldehyde, an aliphatic amine, and dihydroxy naphthalene; a step of adding porous particles to the mixed solution and reacting them; and a step of heat-treating the resulting particles at a temperature of 100°C to 900°C.

The temperature in the heat treatment is preferably 150°C to 600°C.

In the production method of the column filler for liquid chromatography used in the present invention, the step of preparing a mixed solution containing formaldehyde, an aliphatic amine, and dihydroxy naphthalene is carried out.

Since the formaldehyde is unstable, formalin that is a formaldehyde solution is preferably used. Formalin is normally contains, in addition to formaldehyde and water, a small amount of methanol as a stabilizer. The formaldehyde used in the present invention may be formalin as long as the formaldehyde content is clear.

Paraformaldehyde may be mentioned as a polymerization form of formaldehyde. Paraformaldehyde is also usable as a raw material but is poor in reactivity. Accordingly, formalin mentioned above is preferably used.

The aliphatic amine is normally represented by $R\text{-}NH_2$, and R in the formula is preferably an alkyl group having a carbon number of 5 or less. Examples of the alkyl group having a carbon number of 5 or less include methyl, ethyl, n-propyl, isopropyl, cyclopropyl, n-butyl, isobutyl, s-butyl, t-butyl, cyclobutyl, cyclopropylmethyl, n-pentyl, cyclopentyl, cyclopropylethyl, and cyclobutylmethyl groups.

Since a smaller molecular weight is preferred, the substituent R is preferably a methyl, ethyl, or propyl group. Specifically, methylamine, ethylamine, and propylamine are preferably used. Most preferred is methylamine having a smallest molecular weight.

In relation to the dihydroxy naphthalene, there are many isomers. Examples thereof include 1,3-dihydroxy naphthalene, 1,5-dihydroxy naphthalene, 1,6-dihydroxy naphthalene, 1,7-dihydroxy naphthalene, 2,3-dihydroxy naphthalene, 2,6-dihydroxy naphthalene, and 2,7-dihydroxy naphthalene.

Among these, preferred are 1,5-dihydroxy naphthalene and 2,6-dihydroxy naphthalene for their high reactivity. Moreover, 1,5-dihydroxy naphthalene having highest reactivity is preferred.

The ratio of three components including dihydroxy naphthalene, an aliphatic amine, and formaldehyde in the mixed solution is most preferably 1 mol of an aliphatic amine and 2 mol of formaldehyde relative to 1 mol of dihydroxy naphthalene.

The optimum compounding ratio may not be strictly the above ratio because the raw materials could be lost by volatilization or the like during the reaction according to the reaction conditions. Preferably, an aliphatic amine and formaldehyde are compounded in amounts of 0.8 to 1.2 mol and 1.6 to 2.4 mol, respectively, relative to 1 mol of dihydroxy naphthalene.

With the amount of the aliphatic amine of 0.8 mol or more, the oxazine ring can be sufficiently formed and polymerization favorably proceeds. With the amount of the aliphatic amine of 1.2 mol or less, formaldehyde needed for the reaction is not excessively consumed and therefore the reaction proceeds smoothly, leading to preparation of desired naphthoxazine. Similarly, with the amount of formaldehyde of 1.6 mol or more, the oxazine ring can be sufficiently formed and polymerization favorably proceeds. With the amount of formaldehyde of 2.4 mol or less, a side reaction is favorably reduced.

The mixed solution preferably contains a solvent for dissolving and reacting the three raw materials.

Examples of the solvent include solvents commonly used for dissolving resin, such as alcohols (e.g., methanol, ethanol, and isopropanol), tetrahydrofuran, dioxane, dimethylformamide, dimethylacetamide, dimethylsulfoxide, and N-methylpyrrolidone.

The amount of the solvent in the mixed solution is not particularly limited. Commonly, in the case where the amount of the raw materials including dihydroxy naphthalene, an aliphatic amine, and formaldehyde is 100 parts by mass, the amount of the solvent is preferably 300 to 20,000 parts by mass. When the amount of the solvent is 300 parts by mass or more, the solvent can sufficiently dissolve solutes and therefore a uniform film can be obtained in formation of a film. When the amount of the solvent is 20,000 parts by mass or less, the concentration required for formation of a coating layer can be ensured.

In the production method of the column filler for liquid chromatography used in the present invention, the step of adding porous particles to the mixed solution and reacting them is carried out. As the reaction proceeds, a naphthoxazine resin layer can be formed on the surface of the porous particles.

The reaction can proceed at normal temperature. For shortening of the reaction time, heating to 40°C or higher is preferred. Continuous heating opens the formed oxazine ring, and the molecular weight increases along with the polymerization. Thus, a so-called polynaphthoxazine resin is prepared. Attention should be paid to the reaction because excessive proceeding of the reaction increases the viscosity of the solution and such a solution is not suitable for forming a coating layer.

Alternatively, for example, the mixed solution of formaldehyde, an aliphatic amine, and dihydroxy naphthalene may be reacted for a certain period of time, followed by addition of porous particles.

For uniform coating of the porous particles, the porous particles are preferably dispersed during the coating reaction. The dispersion method may be any known method such as stirring, ultrasonication, and rotation. For a better dispersion state, an appropriate dispersant may be added.

Moreover, the surfaces of the porous particles may be uniformly coated with the resin by drying and removing the solvent with hot air or the like after the reaction step. Any hot-air drying method may be employed.

In the production method of the column filler for liquid chromatography used in the present invention, the step of heat treating the particles at a temperature of 100°C to 900°C (preferably 150°C to 600°C) is subsequently carried out.

Through this step, the coating resin obtained in the previous step is carbonized to be formed into a coating layer including an amorphous carbon.

Any heat treatment method may be employed, and examples thereof include a method of using a heating oven or an electric furnace.

The temperature during the heat treatment is 100°C to 900°C (preferably 150°C to 600°C). Since naphthoxazine resin that can be carbonized at low temperature is used in the present invention, an amorphous carbon can be obtained at still lower temperature.

The heat treatment may be performed in the air or in an inert gas such as nitrogen or argon. In the case of the heat treatment temperature of 350°C or higher, the heat treatment is more preferably performed in an inert gas atmosphere.

After the heat treatment, another heating step may be further carried out. Through the step, the specific surface area or the average pore size can be further increased.

The column filler for liquid chromatography can, in the present invention, be used for measurement of various substances and is capable of achieving excellent separation performance. Examples of the liquid chromatography include column chromatography, high performance liquid chromatography (HPLC), and thin-layer chromatography (TLC). Among these, the column filler for liquid chromatography used in the present invention is particularly suitable as a column filler for high performance liquid chromatography. When used as a column filler for high performance liquid chromatography, the column filler for liquid chromatography used in the present invention is capable of achieving excellent separation performance and exhibits a particularly excellent effect in separation of geometric isomers or aromatic compounds.

- Advantageous Effects of Invention

The present invention uses a column filler for liquid chromatography that has a great adsorption capacity, adjustable adsorption selectivity, and high shape retainability and therefore is usable for measurement of various substances and capable of achieving excellent separation performance and a high filling rate in a column.

DESCRIPTION OF EMBODIMENTS

Embodiments of the present invention are more specifically described with reference to, but not limited to, the following examples.

(Example 1)

To 256.43 g of ethanol were sequentially added 7,054 mg of porous silica particles (available from YMC Co., Ltd., average particle size: 4.4 μm, average pore size: 12.0 nm, specific surface area: 330 $m^2$/g) and 781 mg of 1,5-dihydroxy naphthalene (available from Tokyo Chemical Industry Co., Ltd.). Thus, a mixed ethanol solution was prepared.

Next, the obtained mixed solution was treated in an ultrasonic bath for two minutes, and 630 mg of hexahydro-1,3,5-trimethyl-1,3,5-triazine (available from Tokyo Chemical Industry Co., Ltd.) was added thereto. The mixture was stirred under heating at 80°C for four hours. The solution was filtered, and the resulting solids were washed three times with ethanol and vacuum dried at 25°C for 24 hours. Thus, carbon-coated porous silica particles (carbon-coated porous particles) were obtained.

The average particle size, average pore size, specific surface area, and carbon content of the obtained carbon-coated porous silica particles were measured by the following methods. The average particle size was 4.7 μm, the average pore size was 9.69 nm, and the specific surface area was 228.6 $m^2$/g.

(Average particle size)

A FE-SEM image of the obtained particles was analyzed using image analysis software (WINROOF available from Mitani Corporation) to measure the average particle size.

(Average pore size and specific surface area)

The average pore size and specific surface area were measured using a gas-adsorbing type pore size distribution analyzer.

(Example 2)

The carbon-coated porous silica particles obtained in Example 1 were fired in a nitrogen atmosphere at 560°C for two hours. Thus, carbon-coated porous silica particles were obtained.

The obtained carbon-coated porous silica particles had an average particle size of 4.4 μm, an average pore size of 12.52 nm, and a specific surface area of 281.6 $m^2$/g.

(Example 3)

The carbon-coated porous silica particles obtained in Example 1 were fired in a nitrogen atmosphere at 200°C for two hours. Thus, carbon-coated porous silica particles were obtained.

The obtained carbon-coated porous silica particles had an average particle size of 4.5 μm, an average pore size of 9.70 nm, and a specific surface area of 234.4 $m^2$/g.

(Example 4)

The carbon-coated porous silica particles obtained in Example 1 were fired in a nitrogen atmosphere at 400°C for two hours. Thus, carbon-coated porous silica particles were obtained.

The obtained carbon-coated porous silica particles had an average particle size of 4.5 μm, an average pore size of 9.78 nm, and a specific surface area of 277.1 $m^2$/g.

(Comparative Example 1)

Commercially available octadecylated silica particles (available from GL Science, particles filled in Inertsil ODS-3) were used.

The octadecylated silica particles had an average particle size of 5.0 μm.

(Comparative Example 2)

Commercially available porous silica particles (available from YMC) were used. The silica particles had an average particle size of 5.0 μm, an average pore size of 12.0 nm, and a specific surface area of 330 $m^2$/g.

(Evaluation method)

(1) HPLC separation test

The particles of Examples 1 and 2 and Comparative Example 1 were separately filled in a stainless-steel column (inner diameter: 4.6 mm, length: 150 mm). Thus, filled columns were prepared. Using these filled columns, the separation states under the measurement conditions of a column temperature of 20°C, a flow rate of 1.0 ml/min, and a measurement time of 60 minutes were observed, and retention factors (k) and separation factors (α) were calculated.

Two types of test samples including test sample A (benzene, naphthalene, anthracene, cis-stilbene, trans-stilbene, butyl benzene, 1,2,3,4-tetrahydro-naphthalene) and test sample B (naphthalene, anthracene, cis-stilbene, trans-stilbene) were used in the test. In the case of the test sample A, the mobile phase used was ethanol. In the case of the test sample B, the mobile phase used was a solvent mixture containing ethanol and tetrahydrofuran (EtOH/THF = 50/50).

Here, the retention factor k can be calculated by the equation: $k = (t_R - t_0)/t_0$ ($t_R$: retention time, $t_0$: time between introduction of test sample and appearance of peak of component not retained in the column). The separation factor α means the ratio of the retention factors, and is specifically calculated by the equation: $\alpha = k_2/k_1$ ($k_1$: retention factor of substance eluted first, $k_2$: retention factor of substance eluted later). Commonly, "α = 1" means that the elution times are the same and the substances are not separated.

The separation factors α were calculated in relation to "naphthalene and anthracene", "cis-stilbene and trans-stilbene", "butyl benzene and 1,2,3,4-tetrahydro-naphthalene".

The term "adsorbed" in Table 1 refers to a case where the measurement was not completed in the measurement time (60 minutes). In the case where the retention factor $k_2$ is "adsorbed", the separation factor α was infinite.

(2) Column filling rate

In the step of producing filled columns in "(1) HPLC separation test", the column filling rate was calculated using the following equation in which V0 represents the volume of the column before filling and V represents the void volume of the column after filling.

$$\text{Column filling rate} = 100 \times (V0 - V)/V0$$

The void volume V of the column after filling can be estimated from the volume of the solvent that is not retained in "(1) HPLC separation test".

(3) G/D band peak intensity ratio

The peak ratio between G band and D band of the obtained particles was measured by Raman spectroscopy using Almega XR (available from Thermo Fisher Scientific Inc.), and the peak intensity ratio between G band and D band was calculated. The laser light used had a wavelength of 530 nm.

(4) TOF-SIMS measurement

The mass spectrum derived from the benzene ring (at around 77.12) and the mass spectrum derived from the naphthalene ring (at around 127.27) of the coating layer of the obtained particles were confirmed by time-of-flight secondary ion mass spectrometry (TOF-SIMS) using TOF-SIMS 5 (available from ION-TOF GmbH). The TOF-SIMS measurement was performed under the following conditions. For avoiding contamination derived from the air or the storage case as far as possible, the produced sample was stored in a clean case for storing silicon wafers.

Primary ion: 209Bi+1
Ion voltage: 25 kV
Ion current: 1 pA
Mass range: 1 to 300 mass
Analysis area: 500 × 500 μm

Charge prevention: Neutralization by electronic irradiation Random raster scan

(5) X-ray diffraction

The diffraction data was obtained using an X-ray diffractometer (SmartLab Multipurpose available from Rigaku Corporation) under the measurement conditions including the X-ray wavelength of CuK$\alpha$ 1.54A, measurement range of $2\theta = 10°$ to $70°$, scanning speed of 4°/min, and step of 0.02°.

Whether or not the peak was detected at a position where $2\theta$ is 26.4° in the obtained diffraction data was determined.

[Table 1]

| | | | | | Example 1 | Example 2 | Example 3 | Example 4 | Comparative Example 1 | Comparative Example 2 |
|---|---|---|---|---|---|---|---|---|---|---|
| Particles before coating | Material | | | | Silica | Silica | Silica | Silica | Silica | Silica |
| | Average particle size (μm) | | | | 4.4 | 4.4 | 4.4 | 4.4 | 5.0 | 5.0 |
| | Average pore size (nm) | | | | 12.0 | 12.0 | 12.0 | 12.0 | - | 12.0 |
| | Specific surface area ($m^2/g$) | | | | 330 | 330 | 330 | 330 | - | 330 |
| Coating layer | Material | | | | Amorphous carbon | Amorphous carbon | Amorphous carbon | Amorphous carbon | Chemically modified with octadecylsilyl group | - |
| | Measurement | G/D band peak intensity ratio | | | - | 1.5 | 1.7 | 2.2 | | - |
| | | TOF-SIMS measurement | | Benzene ring | Detected | Detected | Detected | Detected | | Not detected |
| | | | | Naphthalene ring | Detected | Detected | Detected | Detected | | Not detected |
| | | X-ray diffraction | | | Not detected | Not detected | Not detected | Not detected | | Not detected |
| Coated particles | Firing temperautre (°C) | | | | - | 560 | 200 | 400 | - | - |
| | Firing time (hour) | | | | - | 2 | 2 | 2 | - | - |
| | Average particle size (μm) | | | | 4.7 | 4.4 | 4.5 | 4.5 | - | - |
| | Average pore size (nm) | | | | 9.69 | 12.52 | 9.70 | 9.78 | - | - |
| | Specific surface area ($m^2/g$) | | | | 228.6 | 281.6 | 234.4 | 277.1 | - | - |
| Difference in specific surface area before and after coating ($m^2/g$) | | | | | 101.4 | 48.4 | 95.6 | 52.9 | - | - |
| | | Test sample A | Benzene | Retention factor | 0,11 | 0,45 | - | - | 0,24 | - |
| | | | Naphthalene | Retention factor | 0,40 | Adsorbed | - | - | 0,33 | - |
| | | | Anthracene | Retention factor | 1,25 | Adsorbed | - | - | 0,48 | - |
| | | | Separation factor | | 3,13 | - | - | - | 1,45 | - |
| | | | cis-stilbene | Retention factor | 0,29 | 4,90 | - | - | 0,35 | - |

(continued)

| | | | | | Example 1 | Example 2 | Example 3 | Example 4 | Comparative Example 1 | Comparative Example 2 |
|---|---|---|---|---|---|---|---|---|---|---|
| Evaluation | Separation test | | trans-stilbene | Retention factor | 0,58 | Adsorbed | - | - | 0,40 | - |
| | | | Separation factor | | 2,00 | Infinite | - | - | 1,14 | - |
| | | | Butylbenzene | Retention factor | 0,11 | 1,07 | - | - | 0,38 | - |
| | | | 1,2,3,4-tetrahydro-naphthalene | Retention factor | 0,20 | 0,58 | - | - | 0,44 | - |
| | | | Separation factor | | 1,82 | 1,84 | - | - | 1,16 | - |
| | | Test sample B | Naphthalene | Retention factor | - | 1,05 | - | - | - | - |
| | | | Anthracene | Retention factor | - | 13,60 | - | - | - | - |
| | | | Separation factor | | - | 12,95 | - | - | - | - |
| | | | cis-stilbene | Retention factor | - | 0,20 | - | - | - | - |
| | | | trans-stilbene | Retention factor | - | 1,96 | - | - | - | - |
| | | | Separation factor | | - | 9,80 | - | - | - | - |
| | Column filling rate | | | | 25.0 | 15.8 | - | - | 27,8 | - |

INDUSTRIAL APPLICABILITY

The present invention uses a column filler for liquid chromatography that has a great adsorption capacity, adjustable adsorption selectivity, and high shape retainability and therefore is usable for measurement of various substances and capable of achieving excellent separation performance and a high filling rate in a column.

## Claims

1. Use of carbon-coated porous particles as a column filler for liquid chromatography,

   the carbon-coated porous particles comprising porous particles each having a coating layer containing an amorphous carbon on a surface,
   wherein the amorphous carbon is obtained by carbonizing an oxazine resin.

2. The use of carbon-coated porous particles as a column filler for liquid chromatography according to claim 1, wherein the carbon-coated porous particles have a specific surface area of 10 to 4,000 $m^2/g$.

3. The use of carbon-coated porous particles as a column filler for liquid chromatography according to claim 1 or 2, wherein the porous particles have an average particle size of 10 nm to 500 $\mu$m.

4. The use of carbon-coated porous particles as a column filler for liquid chromatography according to claim 1, 2, or 3, wherein the porous particles have an average pore size of 1 to 200 nm.

5. The use of carbon-coated porous particles as a column filler for liquid chromatography according to claim 1, 2, 3, or 4, wherein the rate of change in the average pore size between the porous particles and the carbon-coated porous particles is within 30%.

6. The use of carbon-coated porous particles as a column filler for liquid chromatography according to claim 1, 2, 3, 4, or 5,
   wherein the porous particles comprise an inorganic material.

7. The use of carbon-coated porous particles as a column filler for liquid chromatography according to claim 6, wherein the inorganic material contains at least one selected from the group consisting of silica, alumina, zirconia, and titania.

8. Use of carbon-coated porous particles used as a column filler in liquid chromatography according to any of claims 1 to 7, in a technique selected from the group consisting of: column chromatography, high performance liquid chromatography (HPLC), and thin-layer chromatography (TLC).

9. Use according to claim 8, wherein the technique is high performance liquid chromatography.

10. Use according to claim 9, for the separation of geometric isomers or aromatic compounds.

## Patentansprüche

1. Verwendung von mit Kohlenstoff beschichteten porösen Partikeln als Säulenfüller für Flüssigchromatografie,

   wobei die mit Kohlenstoff beschichteten porösen Partikel poröse Partikel umfassen, die jeweils eine Beschichtung aufweisen, die einen amorphen Kohlenstoff auf einer Oberfläche enthalten,
   wobei der amorphe Kohlenstoff durch das Karbonisieren eines Oxazinharzes erhalten wird.

2. Verwendung von mit Kohlenstoff beschichteten porösen Partikeln als Säulenfüller für Flüssigchromatografie nach Anspruch 1,
   wobei die mit Kohlenstoff beschichteten porösen Partikel einen spezifischen Oberflächenbereich von 10 bis 4000 $m^2/g$ aufweisen.

**3.** Verwendung von mit Kohlenstoff beschichteten porösen Partikeln als Säulenfüller für Flüssigchromatografie nach Anspruch 1 oder 2,
wobei die porösen Partikel eine durchschnittliche Partikelgröße von 10 nm bis 500 $\mu$m aufweisen.

**4.** Verwendung von mit Kohlenstoff beschichteten porösen Partikeln als Säulenfüller für Flüssigchromatografie nach Anspruch 1, 2 oder 3,
wobei die porösen Partikel eine durchschnittliche Porengröße von 1 bis 200 nm aufweisen.

**5.** Verwendung von mit Kohlenstoff beschichteten porösen Partikeln als Säulenfüller für Flüssigchromatografie nach Anspruch 1, 2, 3 oder 4,
wobei die Änderungsrate in der durchschnittlichen Porengröße zwischen den porösen Partikeln und den mit Kohlenstoff beschichteten Partikeln im Bereich von 30 % liegt.

**6.** Verwendung von mit Kohlenstoff beschichteten porösen Partikeln als Säulenfüller für Flüssigchromatografie nach Anspruch 1, 2, 3, 4 oder 5,
wobei die porösen Partikel ein anorganisches Material umfassen.

**7.** Verwendung von mit Kohlenstoff beschichteten porösen Partikeln als Säulenfüller für Flüssigchromatografie nach Anspruch 6,
wobei das anorganische Material mindestens eines enthält, ausgewählt aus der Gruppe, bestehend aus Siliciumdioxid, Aluminiumoxid, Zirkonia und Titandioxid.

**8.** Verwendung von mit Kohlenstoff beschichteten porösen Partikeln, verwendet als Säulenfüller in der Flüssigchromatografie nach einem der Ansprüche 1 bis 7, in einer Technik, ausgewählt aus der Gruppe, bestehend aus: Säulenchromatografie, Hochleistungsflüssigkeitschromatografie (HPLC) und Dünnschichtchromatografie (TLC).

**9.** Verwendung nach Anspruch 8, wobei die Technik Hochleistungsflüssigkeitschromatografie ist.

**10.** Verwendung nach Anspruch 9 zu Trennung von geometrischen Isomeren oder aromatischen Verbindungen.

## Revendications

**1.** Utilisation de particules poreuses enrobées de carbone en tant que phase stationnaire de colonne pour chromatographie liquide,

les particules poreuses enrobées de carbone comprenant des particules poreuses ayant chacune une couche d'enrobage contenant du carbone amorphe sur une surface,
dans laquelle le carbone amorphe est obtenu par carbonisation d'une résine oxazine.

**2.** Utilisation de particules poreuses enrobées de carbone en tant que phase stationnaire de colonne pour chromatographie liquide selon la revendication 1,
dans laquelle les particules poreuses enrobées de carbone ont une surface spécifique de 10 à 4 000 $m^2$/g.

**3.** Utilisation de particules poreuses enrobées de carbone en tant que phase stationnaire de colonne pour chromatographie liquide selon la revendication 1 ou 2,
dans laquelle les particules poreuses ont une taille de particule moyenne de 10 nm à 500 $\mu$m.

**4.** Utilisation de particules poreuses enrobées de carbone en tant que phase stationnaire de colonne pour chromatographie liquide selon la revendication 1, 2 ou 3,
dans laquelle les particules poreuses ont une taille de pore moyenne de 1 à 200 nm.

**5.** Utilisation de particules poreuses enrobées de carbone en tant que phase stationnaire de colonne pour chromatographie liquide selon la revendication 1, 2, 3 ou 4,
dans laquelle le taux de variation de la taille moyenne de pore entre les particules poreuses et les particules poreuses enrobées de carbone est d'au plus 30 %.

**6.** Utilisation de particules poreuses enrobées de carbone en tant que phase stationnaire de colonne pour chromatographie liquide selon la revendication 1, 2, 3, 4 ou 5,
dans laquelle les particules poreuses comprennent un matériau inorganique.

**7.** Utilisation de particules poreuses enrobées de carbone en tant que phase stationnaire de colonne pour chromatographie liquide selon la revendication 6,
dans laquelle le matériau inorganique contient au moins l'un choisi dans le groupe constitué par la silice, de l'alumine, de la zircone et de l'oxyde de titane.

**8.** Utilisation de particules poreuses enrobées de carbone utilisées en tant que phase stationnaire de colonne en chromatographie liquide selon l'une quelconque des revendications 1 à 7, dans une technique choisie dans le groupe constitué par : la chromatographie sur colonne, la chromatographie liquide haute performance (HPLC) et la chromatographie sur couche mince (TLC).

**9.** Utilisation selon la revendication 8, dans laquelle la technique est la chromatographie liquide haute performance.

**10.** Utilisation selon la revendication 9, pour la séparation d'isomères géométriques ou de composés aromatiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006192420 A
- WO 2016052406 A


### Non-patent literature cited in the description


- **KIM et al.** *J. Power Sourc.*, vol. 272 (2104), 689-695
- **KIM et al.** *Angew. Chem.*, 2008, vol. 47 (52), 10151-10154
- **LU et al.** *Anal. Chem.*, 2015, vol. 87, 3616-3622